# EUROPÄISCHE PATENTANMELDUNG

(11) **EP 1 335 519 A2**
(43) Veröffentlichungstag der Anmeldung: **13.08.2003**
(21) Anmeldenummer: 03000570.6
(22) Anmeldetag: 13.01.2003
(51) Int. Cl.: H04L 7/027

(54) **Verfahren zum Erzeugen einer Signalpulsfolge mit einer vorgegebenen stabilen Grundfrequenz**

(30) Priorität: 31.01.2002 DE 10203892
(71) Anmelder: Infineon Technologies AG, 81669 München (DE)
(72) Erfinder: Waldner, Markus, 9020 Klagenfurt (AT)
(74) Vertreter: Reinhard - Skuhra - Weise & Partner GbR

(57) **Zusammenfassung**

Die Erfindung betrifft ein Verfahren zum Erzeugen einer Signalpulsfolge (y(n)) mit einer vorgegebenen stabilen Grundfrequenz (f₀) aus einer Folge von Signalpulsen (x(n)), deren Frequenz (f) schwankt und die spektrale Anteile aufweist, deren Frequenz mindestens ein vorgegebenes Vielfaches der Grundfrequenz (f₀) beträgt.

Um ein frequenzstabiles Taktsignal aus einem verrauschten Taktsignal rückzugewinnen, wird erfindungsgemäß die Folge von Signalpulsen (x(n)) einem digitalen Filter (2) zugeführt, dessen Durchlassbereich um die Grundfrequenz (f₀) liegt und das um eine vorgegebene halbe Abtastfrequenz (fₐ) sperrt und das bei Erregung ein vorzeichenbehaftetes Ausgangssignal (B) ausgibt, und bei jedem Vorzeichenwechsel des Ausgangssignals (B) ein Taktsignalpuls (C) erzeugt.

## Beschreibung

Die Erfindung betrifft ein Verfahren zum Erzeugen einer Signalpulsfolge mit einer vorgegebenen stabilen Grundfrequenz, d.h. die Wiederherstellung eines Taktsignals (Clock recovery) nach dem Oberbegriff von Anspruch 1.

Bei digitalen Schaltungen wird im allgemeinen immer ein Taktsignal (Clock) verwendet, damit die einzelnen Rechen- bzw. Arbeitsschritte synchron abgearbeitet werden können. Wenn nun die Periodendauer des Taktes nicht immer gleich ist und in einem recht großen Maße schwankt (jittert), dann kann das zu Fehlfunktionen in der Schaltung führen.

Beim Stand der Technik wird i.a. darauf vertraut, dass das Taktsignal so wenig schwankt (wenig "Jitter hat"), dass die Anwendung dadurch nicht gestört wird. Gegebenenfalls wird die digitale Schaltung so ausgelegt, dass sie robust gegenüber Frequenzschwankungen beim Taktsignal ist.

Wenn man aber zum außen angelegten Takt auch noch andere Taktsignale mit höheren Frequenzen benötigt, geht das externe Taktsignal zuerst in einen PLL- Regelkreis, der so gut ausgelegt ist, dass möglichst wenig Jitter übertragen wird. Dies bedeutet jedoch erhöhten schaltungstechnischen Aufwand, d.h. man muss teure externe Bausteine verwenden, die das Taktsignal aufbereiten und eine aufwendige PLL- Regelung enthalten.

Aufgabe der Erfindung ist es, ein einfaches Verfahren anzugeben, mit dem ein frequenzstabiles Taktsignal aus einem verrauschten Taktsignal rückgewonnen werden kann.

Diese Aufgabe wird gelöst durch das Verfahren nach Anspruch 1. Bevorzugte Ausführungsformen der Erfindung sind Gegenstand der Unteransprüche.

Bei dem erfindungsgemäßen Verfahren mit einem "Jittered Clock recovery filter" fasst man das verrauschte Taktsignal als ideales Rechtecksignal auf, das neben der Grundschwingung und den entsprechenden Oberwellen noch zusätzlich aufmodulierte Frequenzen aufweist, wodurch es dann zur Abweichung vom idealen Rechteck kommt. Nun kann man mit einem Bandpass, der auf die Taktsignalfrequenz (Frequenz der Grundschwingung) abgestimmt ist, die Grundschwingung wieder herausfiltern. Wenn das Durchlassband sehr schmal ist, werden kaum Oberwellen und damit kein Jitter übertragen.

Das erfindungsgemäße Verfahren zum Erzeugen einer Signalpulsfolge mit einer vorgegebenen stabilen Grundfrequenz aus einer Folge von Signalpulsen, deren Frequenz schwankt und die spektrale Anteile aufweist, deren Frequenz mindestens ein vorgegebenes Vielfaches der Grundfrequenz beträgt, ist dadurch gekennzeichnet, dass die Folge von Signalpulsen einem digitalen Filter zugeführt wird, dessen Durchlassbereich um die Grundfrequenz liegt und das um eine vorgegebene halbe Abtastfrequenz sperrt und das bei Erregung ein vorzeichenbehaftetes Ausgangssignal ausgibt, und bei jedem Vorzeichenwechsel des Ausgangssignals ein Taktsignalpuls erzeugt wird.

Insbesondere umfasst das digitale Filter ein Bandfilter, das bei der Frequenz Null und der halben Abtastfrequenz sperrt, und einen Nulldurchgangsdetektor, der bei jedem Nulldurchgang einen Taktsignalpuls erzeugt.

Bei einer bevorzugten Ausführungsform der Erfindung umfasst das Bandfilter ein FIR-Filter und ein IIR-Filter, die in Reihe geschaltet sind, wobei die Eigenfrequenz des IIR-Filters gleich der Grundfrequenz ist.

Für spezielle Anwendungen wird die Grundfrequenz durch einen PLL- Regelkreis nach dem digitalen Filter vervielfacht. In diesem Fall kann die vervielfachte Grundfrequenz nach dem PLL- Regelkreis als Abtastfrequenz von dem Bandfilter und dem Nulldurchgangsdetektor verwendet werden.

Ein Vorteil der Erfindung besteht darin, dass man keine aufwändige und genaue PLL- Regelung benötigt. Die schlechtere und langsamere Regelung, welche den PLL- Regelkreis enthalten kann, braucht weniger Chipfläche und ist somit nicht nur vom Entwicklungsaufwand her billiger. Im übrigen erspart man sich teure externe Chips, die das Taktsignal aufbereiten, wodurch die Kosten von Boards usw. in die Höhe getrieben werden, da eine Schaltung, die robust gegen Jitter sein soll, für höhere Taktfrequenzen als den eigentlichen Arbeitstakt ausgelegt werden muss. Das bedeutet, dass stärkere Treiber und stärkeres "pipelining" vorgesehen werden muss, was mit mehr Designaufwand verbunden ist. Aufgrund der stärkeren Treiber wird außerdem mehr Fläche benötigt, und das bedeutet höhere Kosten. Da bei dem erfindungsgemäßen Verfahren ein digitales Filter eingesetzt wird, wird kaum Chipfläche benötigt, äußere Einflüsse (Temperatur) haben weniger Bedeutung, und aufgrund der einfachen Struktur eines digitalen Filters ist das Verfahren leicht zu implementieren.

Weitere Merkmale und Vorteile der Erfindung ergeben sich aus der folgenden Beschreibung von einem Ausführungsbeispiel, bei der Bezug genommen wird auf die beigefügten Zeichnungen.

Fig. 1 zeigt einen Filteraufbau, mit dem das erfindungsgemäße Verfahren durchgeführt werden kann.

Fig. 2 zeigt die Durchlasskurve des Filters nach Fig. 1.

Fig. 3 zeigt ein Zeitdiagramm zur Erläuterung der Erzeugung der frequenzstabilen Signalpulse aus einer Eingangspulsfolge, die nicht frequenzstabil ist.

Fig. 4 zeigt eine Ausführungsform des Bandfilters aus Fig. 1.

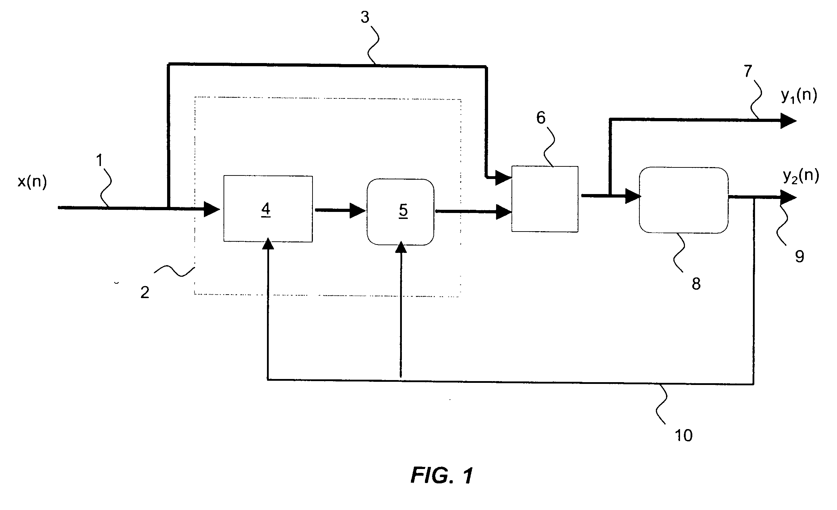

In Fig. 1 ist ein Filteraufbau zum Erzeugen einer Signalpulsfolge mit einer vorgegebenen stabilen Grundfrequenz gezeigt, mit dem sich das erfindungsgemäße Verfahren durchführen lässt. Der Filteraufbau wird über einen Eingang 1 mit einer Folge von Signalpulsen x(n) versorgt, deren Frequenz schwankt und die damit nicht unmittelbar zum Takten von zeitkritischen Vorgängen in einer (nicht dargestellten) Schaltung verwendet werden können.

Die Frequenzschwankungen der Eingangspulse können so aufgefasst werden, dass die Eingangspulse außer ihrer gewünschten Grundfrequenz f₀ spektrale Anteile aufweisen, deren Frequenz über der Grundfrequenz liegt und insbesondere mindestens ein vorgegebenes Vielfaches der Grundfrequenz f₀ beträgt. Der spektrale Anteil der Eingangpulse mit f₀ oder einem Vielfachen davon wird unabhängig von seiner Amplitude verwendet, um ein System zu (Resonanz-) Schwingungen anzuregen. Die Schwingungen des Systems dienen dann als Referenz für die Erzeugung des gewünschten frequenzstabilen Taktsignals. Dazu wird in einer bevorzugten Ausführungsform der Erfindung der Nulldurchgang der(Resonanz-) Schwingungsamplitude erfasst. Um jedoch Nulldurchgänge nur bei der Resonanzfrequenz zuzulassen, wird ein entsprechendes Sperrfilter vorgesehen, durch das alle unerwünschten Frequenzanteile unterdrückt werden.

Erfindungsgemäß wird die Folge von Signalpulsen x(n) einem digitalen Filter 2 zugeführt, dessen Durchlassbereich um die Grundfrequenz f₀ liegt und das um eine vorgegebene halbe Abtastfrequenz fₐ/2 sperrt. Im Durchlassbereich, d.h. bei Erregung ist das Filter dagegen derart ausgelegt, dass es ein vorzeichenbehaftetes Ausgangssignal ausgibt. Ein derartiges Filter ist das Bandfilter 4, das Teil des digitalen Filters 2 ist. Hat die ankommende Signalkomponente also eine Frequenz, die sich von der gewünschten Grundfrequenz f₀ unterscheidet, so sperrt das Bandfilter 4 und damit das digitale Filter 2, so dass kein Taktsignal an der folgenden Schaltung anliegt. Hat das ankommende Signal dagegen eine Komponente, deren Frequenz f₀ entspricht, so wird das Bandfilter 4 durch diese Frequenzkomponente zum Schwingen angeregt, wobei die Schwingungsfrequenz die gewünschte Eigenfrequenz ist.

Das Ausgangssignal des Bandfilters 4 wird in einen Nullpunktdetektor 5 eingekoppelt, der bei jedem Vorzeichenwechsel des Ausgangssignals des Bandfilters 4 einen Taktsignalpuls erzeugt. Die Funktionsweise und die technische Umsetzung eines solchen Nullpunktdetektors 5 ist dem Fachmann bekannt und wird daher hier nicht weiter erläutert. Im übrigen können auch andere Elemente verwendet werden, die beim Durchgang des Ausgangssignals von dem Bandfilter 4 durch einen bestimmten Wert (Maximum oder Minimum) einen Taktpuls erzeugen.

Die Taktpulse y(n), die von dem Nullpunktdetektor 5 erzeugt werden, haben die Frequenz f₀, die die Resonanzfrequenz des Bandfilters 4 ist und gleich der gewünschten Frequenz ist.

Die frequenzstabilen Taktpulse y(n) können nun weitererarbeitet werden oder direkt verwendet werden. Im zweiten Fall werden sie über einen Ausgang 7 in die (nicht dargestellte) nachfolgende Schaltung eingespeist, anderenfalls werden sie mit einem PLL- Regelkreis 8 auf eine höhere Frequenz umgesetzt und erst dann über einen Ausgang 9 in die (nicht dargestellte) nachfolgende Schaltung eingespeist.

Die vervielfachte Frequenz nach dem PLL- Regelkreis 8 kann gleichzeitig als Steuertakt für die oben beschriebenen Komponenten des digitalen Filters 2 verwendet werden, um das Überabtasten (oversampling) des Eingangssignals dieser Komponenten zu steuern. Es wird daher in der gezeigten Ausführungsform nach Fig. 1 über eine Rückkopplungsleitung 10 zurückgeschleift und liegt an dem Bandfilter 4 und dem Nullpunktdetektor 5 in dem digitalen Filter 2 an.

Da für die Versorgung des digitalen Filters 2 mit der Abtastfrequenz fₐ der PLL- Regelkreis 8 zunächst anschwingen muss, ist in der gezeigten Ausführungsform ein Multiplexer 6 und eine Bypass- Leitung 3 vorgesehen, womit zu Beginn der Taktsignalrückgewinnung, d.h. direkt nach dem Einschalten des Filteraufbaus der PLL- Regelkreis 8 zunächst mit dem frequenzinstabilen Takt hochgefahren wird, und nach Ende des Einschwingvorgangs wird der Eingang des PLL- Regelkreises 8 mit dem Multiplexer 6 auf das frequenzstabile Taktsignal umgeschaltet.

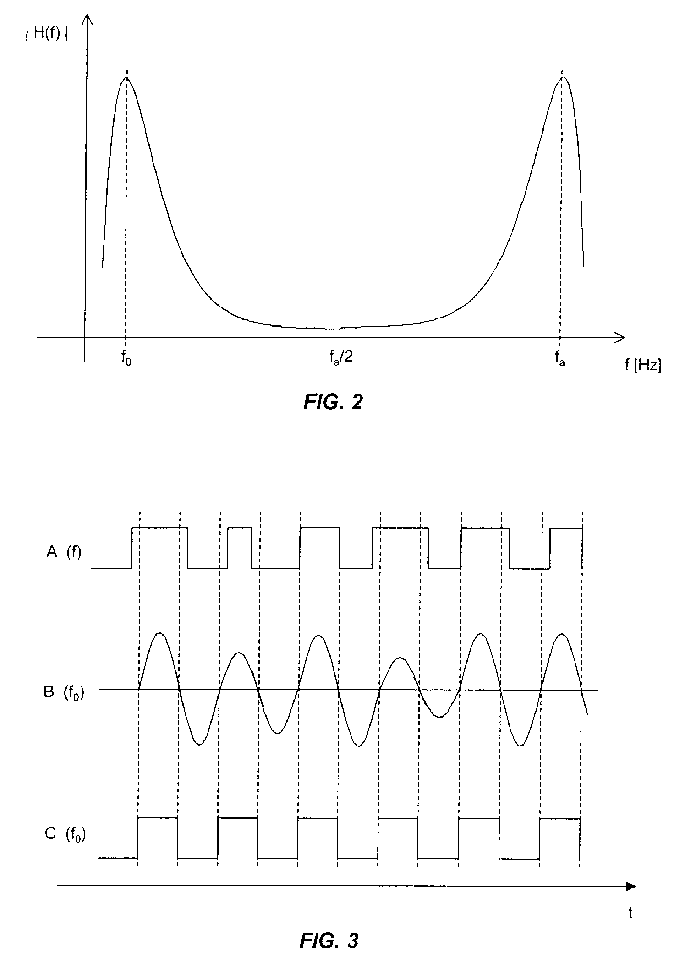

In Fig. 2 ist der Verlauf der Durchlasskurve |H(f)| gegenüber der Frequenz dargestellt. Wie ersichtlich hat diese Kurve ihr Maximum bei f₀ bzw. fₐ. D.h. bei f₀ und fₐ ist die Dämpfung des durchgelassenen Signals minimal. Zwischen diesen beiden Maxima nimmt die Durchlasskurve stark ab, bis auf Null bei der Hälfte der Abtastfrequenz, d.h. bei fₐ/2.

Aus dem Verlauf der Kurve wird deutlich, dass im wesentlichen nur Schwingungen mit der Frequenz f₀ angeregt werden.

In Fig. 3 ist die Folge von Eingangspulsen A gezeigt. Diese haben in etwa die gewünschte Frequenz f₀, sind aber Frequenzschwankungen unterworfen, die durch die Abweichungen ihrer Flanken von den "exakten" vertikalen Linien angedeutet sind.

Die Abweichung der Istfrequenz der Eingangspulse A von der Sollfrequenz führt dazu, dass die Spektralkomponente in den Eingangspulsen A mit der gewünschten Frequenz f₀ eine unterschiedlichen Amplitude haben. Unabhängig davon, schwingt das Bandfilter 4 jedoch auf seiner Resonanzfrequenz f₀, angeregt durch eben die Spektralkomponenten mit f₀ in den Eingangspulsen. Die Schwingungsamplitude des Bandfilters ist in Fig. 3 mit B bezeichnet. Sie schwankt je nach "Übereinstimmung" der Frequenz der Eingangspulse A mit der Resonanzfrequenz des Bandfilters 4.

Bei jedem Nulldurchgang des Signals B, der mit den "exakten" vertikalen Linien zusammenfällt, wird durch den Nulldurchgangsdetektor 5 ein Rechteckpuls ausgegeben, so dass die Folge von Rechteckpulsen die exakte Frequenz f₀ aufweist. Diese Folge von exakten Taktsignalpulsen ist mit C bezeichnet.

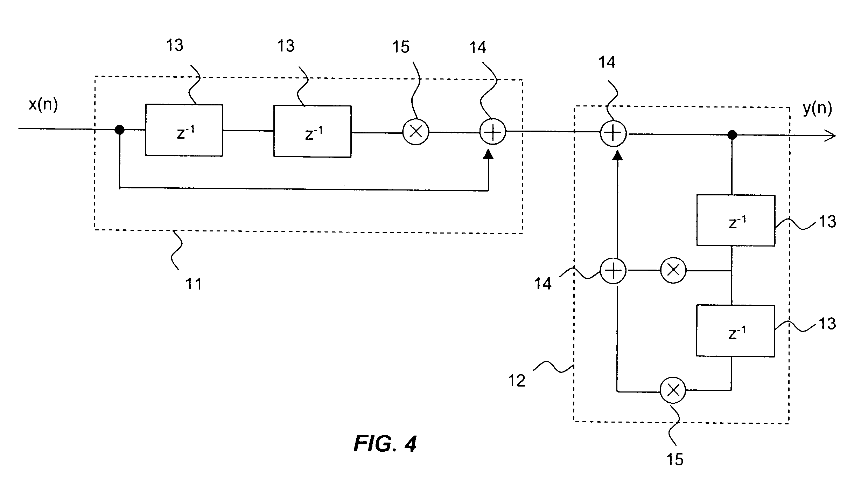

In Fig. 4 ist eine mögliche Ausführungsform des Bandfilters 4 gezeigt. Das Bandfilter 4 setzt sich aus einem FIR-Filter 11 und einem IIR-Filter 12 zusammen, die in Reihe geschaltet sind. Die Eigenfrequenz des IIR-Filters 12 ist gleich der gewünschten Grundfrequenz f₀. Der Aufbau des FIR-Filters 11 und des IIR-Filters 12 aus Verzögerungsgliedern 13, Addierer 14 und Multiplizierern 15 ist dem Fachmann bekannt und wird hier nicht weiter erläutert. Man beachte jedoch, dass die Multiplizierer 15 mit jeweils einem eigenen Wert multiplizieren, der in der Fig. nicht angegeben ist, der sich aber i.a. von dem anderer Multiplizierer 15 unterscheidet und gegebenenfalls auch negativ sein kann.

Zusammenfassend ist es ein wesentliches Merkmal der Erfindung, dass für die Erzeugung eine Schwingung mit der gewünschten Frequenz f₀ ein digitales IIR- Filter 12 verwendet wird. Denn bei jedem Umschalten des Taktsignales C erfolgt eine Neuinitialisierung des IIR-Filters 12. Diese Neuinitialisierung erfolgt immer, unabhängig davon, ob eine Änderung der Amplitude des Signals B vorliegt oder nicht. Bei jeder dieser Neuinitialisierungen wird der Zustand des IIR-Filters 12 geändert, so dass sich das IIR-Filter immer in einem eingeschwungenen Zustand für den Signalanteil mit der Frequenz f₀ befindet.

Ein weiteres Merkmal der Erfindung ist es, dass der Arbeitstakt, den das Filter selbst braucht, um arbeiten zu können, von dem PLL- Regelkreis 8 bereitgestellt wird, das seinerseits von dem Filter sein frequenzstabiles Taktsignal erhält. Das Filter 2 wird erst dann zugeschaltet, wenn der PLL- Regelkreis 8 eingeschwungen ist. Vorher wird das Taktsignal am Filter 2 vorbeigeführt.

Das Prinzip der Erfindung funktioniert umso besser, je höher die Überabtastung (das Oversampling) ist.

Die Verzögerungsglieder sind vorzugsweise Register mit einer Breite von 8 Bit.

### Bezugszeichen

- 1: Eingangsleitung
- 2: digitales Taktfilter
- 3: Bypass-Leitung
- 4: Bandfilter
- 5: Nulldurchgangsdetektor
- 6: Multiplexer
- 7: Ausgang für Grundfrequenz
- 8: PPL-Regelkreis für Frequenz-Vervielfachung
- 9: Ausgang für vervielfachte Frequenz
- 10: Rückkopplungsleitung für Taktung von Bandfilter und Nulldurchgangsdetektor
- 11: FIR-Filter
- 12: IIR-Filter
- 13: Verzögerungsglied
- 14: Addierer
- 15: Multiplizierer

## Patentansprüche

1. Verfahren zum Erzeugen einer Signalpulsfolge (y(n)) mit einer vorgegebenen stabilen Grundfrequenz (f₀) aus einer Folge von Signalpulsen (x(n)), deren Frequenz (f) schwankt und die spektrale Anteile aufweist, deren Frequenz mindestens ein vorgegebenes Vielfaches der Grundfrequenz (f₀) beträgt,
**dadurch gekennzeichnet,**
**dass** die Folge von Signalpulsen (x(n)) einem digitalen Filter (2) zugeführt wird, dessen Durchlassbereich um die Grundfrequenz (f₀) liegt und das um eine vorgegebene halbe Abtastfrequenz (fₐ) sperrt und das bei Erregung ein vorzeichenbehaftetes Ausgangssignal (B) ausgibt, und bei jedem Vorzeichenwechsel des Ausgangssignals (B) ein Taktsignalpuls (C) erzeugt wird.

2. Verfahren nach Anspruch 1,
**dadurch gekennzeichnet,**
**dass** das digitale Filter (2) ein Bandfilter (4), das bei der Frequenz Null und der halben Abtastfrequenz (fₐ) sperrt, und einen Nulldurchgangsdetektor (5), der bei jedem Nulldurchgang einen Taktsignalpuls erzeugt, umfasst.

3. Verfahren nach Anspruch 2,
**dadurch gekennzeichnet,**
**dass** das Bandfilter (4) ein FIR-Filter (11) und ein IIR-Filter (12) umfasst, die in Reihe geschaltet sind, wobei die Eigenfrequenz des IIR-Filters (12) gleich der Grundfrequenz (f₀) ist.

4. Verfahren nach einem der vorangehenden Ansprüche,
**dadurch gekennzeichnet,**
**dass** die Grundfrequenz (f₀) durch ein PLL- Regelkreis (8) nach dem digitalen Filter (2) vervielfacht wird.

5. Verfahren nach Anspruch 4,
**dadurch gekennzeichnet,**
**dass** die vervielfachte Grundfrequenz (f₀) nach dem PLL- Regelkreis (8) als Abtastfrequenz von dem Bandfilter (4) und dem Nulldurchgangsdetektor (5) verwendet wird.
